Europäisches Patentamt

**European Patent Office**

Office européen des brevets

(19)

(11) Numéro de publication: **0 228 977**
**B1**

(12)

# FASCICULE DE BREVET EUROPEEN

(45) Date de publication du fascicule du brevet:
**18.10.89**

(51) Int. Cl.⁴: **E06B 9/08**, A01G 9/22

(21) Numéro de dépôt: **86440107.0**

(22) Date de dépôt: **10.12.86**

(54) Volet roulant pour toits de vérandas et analogues.

(30) Priorité: **08.01.86 FR 8600245**

(43) Date de publication de la demande:
**15.07.87 Bulletin 87/29**

(45) Mention de la délivrance du brevet:
**18.10.89 Bulletin 89/42**

(84) Etats contractants désignés:
**AT BE CH DE ES GB GR IT LI LU NL SE**

(56) Documents cités:
**EP-A- 0 145 628**
**FR-A- 2 407 328**

(73) Titulaire: **Bubendorff, Richard, 10, rue des Acacias,**
**F-68220 Hegenheim(FR)**

(72) Inventeur: **Bubendorff, Richard, 10, rue des Acacias,**
**F-68220 Hegenheim(FR)**

(74) Mandataire: **Aubertin, François, Cabinet Lepage &**
**Aubertin Innovations et Prestations 4, rue de Haguenau,**
**F-67000 Strasbourg(FR)**

ACTORUM AG

## Description

L'invention concerne un volet roulant pour toits de vérandas et analogues comprenant un tablier se déplaçant pratiquement horizontalement et formé de lames dont les chants sont pourvus d'un têton de préhension et, logés dans un caisson, un arbre d'enroulement du tablier, un second arbre pour le déroulement du tablier, des moyens d'entraînement pour entraîner alternativement en rotation l'arbre d'enroulement et l'arbre de déroulement, ces derniers étant alternativement en roue libre lors des opérations inverses, ce second arbre de déroulement étant disposé en aval par rapport à l'arbre d'enroulement et présentant à chaque extrémité une roue à cames d'entraînement coopérant avec les têtons de préhension des lames du tablier.

On connait déjà, par le document EP-A O 145 628, un volet roulant de ce type pour toits de vérandas et analogues, comprenant un tablier, se déplaçant pratiquement horizontalement et formé de lames dont les chants sont pourvus d'un têton de préhension, un arbre d'enroulement et/ou de déroulement du tablier, un second arbre disposé en aval par rapport à l'arbre d'enroulement et dont chaque extrémité présente une roue à cames d'entraînement coopérant avec les têtons des lames et des moyens moteurs entraînant le second arbre.

Ce second arbre est un arbre moteur alors que l'arbre d'enroulement et/ou de déroulement du tablier est un arbre mené. Ce dernier étant libre en rotation, la poussée exercée sur le tablier par le second arbre provoque la rotation de l'arbre d'enroulement. On incorpore dans ce dernier un ressort mis sous tension en phase de déroulement du tablier et agissant lors de l'enroulement. De ce fait, il facilite la rotation de l'arbre d'enroulement au-fur-et-à-mesure de l'arrivée des lames poussées par les branches des roues à cames du second arbre. Du fait que le second arbre est obligé d'exercer une traction sur le tablier enroulé sur l'arbre d'enroulement d'autant plus grande qu'il doit mettre, en phase de déroulement du tablier, le ressort en position comprimée, il est nécessaire de pourvoir ce second arbre d'un moteur très puissant. Non seulement, l'utilisation obligatoire d'un moteur très puissant entraîne une augmentation du coût du volet roulant mais encore il faut prévoir une place disponible très importante en raison de l'encombrement d'un tel moteur très puissant. Par ailleurs, cet inconvénient limite la surface du tablier, ce qui réduit les possibilités d'utiliser un volet roulant pour le recouvrement de vérandas.

Selon un second mode de réalisation de ce document antérieur, on prévoit un moteur unique qui, par l'intermédiaire d'un ensemble de moyens d'entraînement, fort complexe et constitué d'un nombre considérable de pièces, entraîne alternativement en rotation l'arbre d'enroulement et l'arbre de déroulement, ces derniers étant alternativement en roue libre dans les opérations inverses.

Cependant, non seulement en raison du nombre considérable des pièces constituant l'ensemble d'entraînement alternatif des deux arbres, l'entraînement est peu fiable, mais également l'utilisation d'un moteur unique, présente un grand inconvénient.

En effet, en phase d'enroulement, il faut remonter le tablier donc il faut utiliser un moteur puissant en raison du poids du tablier alors qu'en phase de déroulement, l'arbre de déroulement ne fait que pousser le tablier pour faciliter son avance selon une certaine inclinaison par rapport à l'horizontale. Ainsi, en cas d'obstacle bloquant l'avance du tablier en phase de déroulement, le moteur puissant continue à pousser le tablier qui se déforme entre l'extrémité bloquée et l'arbre de déroulement pouvant provoquer la détérioration du tablier.

Par ailleurs, on connait également par le document FR-A 2 407 328 un dispositif permettant de lier cinématiquement en rotation plusieurs arbres d'enroulement de stores, volets roulants ou similaires destinés à être disposés horizontalement à la suite l'un de l'autre devant des portes ou fenêtres séparées l'une de l'autre par des montants en relief disposés transversalement à l'axe de rotation prévu pour lesdits arbres d'enroulement. Ces dispositifs sont constitués par un arbre intermédiaire dont les deux extrémités sont reliées respectivement aux extrémités de deux arbres d'enroulement juxtaposés, cet arbre intermédiaire étant logé dans un coussinet disposé dans un trou pratiqué dans le montant séparant deux portes ou fenêtres juxtaposées.

Toutefois ces volets roulants ne comportent qu'une lignée d'arbres d'enroulement entraînés par un moteur unique .

La présente invention a pour but de remédier à ces inconvénients. L'invention telle qu'elle est caractérisée dans la première revendication , résout le problème consistant à créer un volet roulant pour toits de vérandas et analogues comprenant un tablier se déplaçant pratiquement horizontalement et formé de lames dont les chants sont pourvus d'un têton de préhension et, logés dans un caisson, un arbre d'enroulement du tablier, un second arbre pour le déroulement du tablier, des moyens d'entraînement pour entraîner alternativement en rotation l'arbre d'enroulement et l'arbre de déroulement, ces derniers étant alternativement en roue libre lors des opérations inverses , ce second arbre de déroulement étant disposé en aval par rapport à l'arbre d'enroulement et présentant à chaque extrémité une roue à cames d'entraînement coopérant avec les têtons de préhension des lames du tablier, les moyens d'entraînement étant un premier moteur entraînant directement l'arbre d'enroulement et un second moteur comportant un frein, relié, par l'intermédiaire de moyens de débrayage, à l'arbre de déroulement, le moteur avec frein ayant une puissance inférieure à cette de l'arbre d'enroulement.

Les avantages obtenus grâce à cette invention consistent essentiellement en une augmentation de la fiabilité du volet roulant en simplifiant considérablement les moyens d'entraînement, à une réduction considérable de la puissance du moteur de l'arbre de déroulement, pouvant atteindre jusqu'à vingt fois moindre que la puissance du moteur réalisé dans des volets où le même moteur entraîne alternativement l'arbre d'enroulement et de déroulement, et ainsi présenter un couple moteur plus faible que la résistance du têton de préhension des différentes lames du volet.

De ce fait, en cas d'obstacle, les têtons de préhension bloquent les roues à cames et le second arbre n'est plus entraîné en rotation.

Il en résulte un autre avantage essentiel consistant à pouvoir utiliser le volet roulant, même en cas de gel. En effet, lorsqu'il y a enroulement du tablier sur l'arbre d'enroulement, les différentes lames, par suite de la traction exercée sur elles, se trouvent en position d'extension. Il se dépose de la glace dans les articulations situées entre deux lames consécutives, ce qui empêche leur rapprochement lors du déroulement du tablier. De ce fait, ce dernier présentera une longueur supérieure à sa longueur normale. On a constaté que ce surallongement peut atteindre une valeur de l'ordre de dix pour cent. Ainsi l'extrémité inférieure du tablier peut être bloquée par la traverse inférieure du cadre dormant alors que le fin de course n'a pas encore arrêté le moteur du second arbre. Toutefois, le tablier reste immobile du fait que les têtons de préhension bloquent les roues à cames qui, par conséquent, n'entraînent plus les lames du tablier, ce qui annihile toute détérioration de ce dernier.

Un exemple de réalisation avantageuse de l'invention prévoit que le volet roulant comporte plusieurs tabliers disposés parallèlement et reliés entre eux par un simple accouplement. Ainsi, il est possible de recouvrir un toit de véranda de très grande largeur pouvant atteindre une quinzaine de mètres.

L'invention est exposée ci-après plus en détail à l'aide de dessins représentant seulement un mode d'exécution.

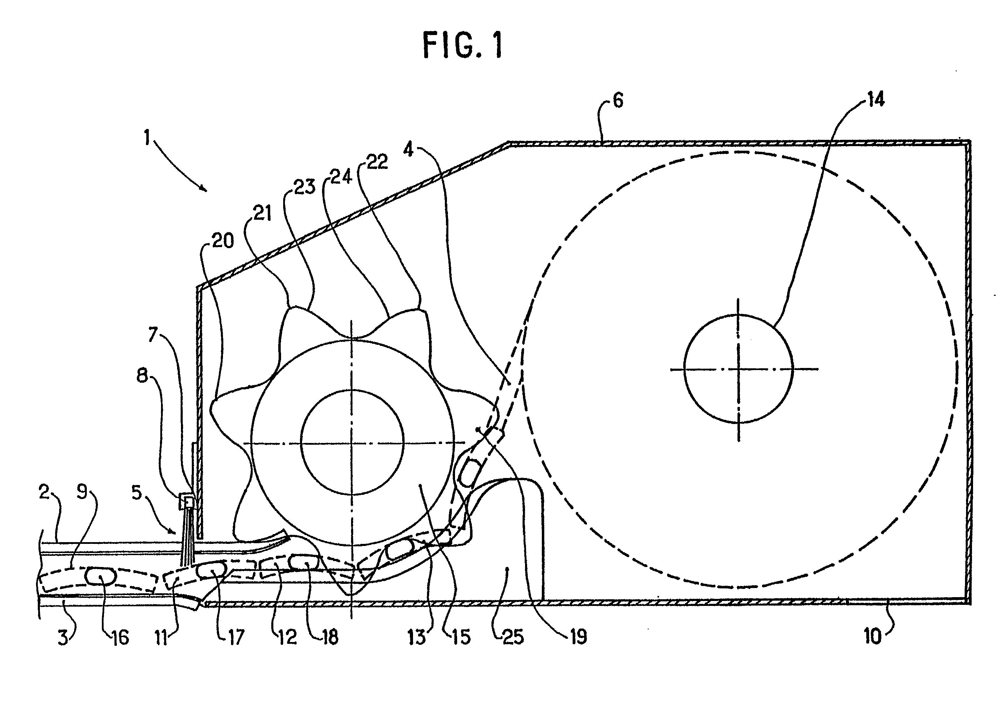

La figure 1 représente une vue en élévation du caisson d'enroulement du tablier du volet roulant conforme à l'invention.

On se réfère à la figure unique.

Le volet roulant 1, utilisé principalement pour les toits des vérandas, comporte un cadre dormant 2 constitué essentiellement de deux glissières 3 servant de moyens de guidage à un tablier 4. L'une des extrémités 5 aboute à un caisson 6 renfermant les différents moyens permettant l'enroulement et /ou le déroulement du tablier 4. A son entrée 7, le caisson 6 est pourvu d'une brosse 8 dont le but est d'éliminer les corps étrangers tels que feuilles, cailloux et autres du dessus 9 de tablier 4. Si, cependant, les corps étrangers sont entraînés à l'intérieur du caisson 6, celui-ci présente à sa partie inférieure une ouverture 10 à travers laquelle retombent lesdits corps étrangers entraînés.

Le tablier 4 est formé d'une pluralité de lames 11, 12, 13 reliées entre elles par une articulation quelconque mais nécessairement télescopique pour permettre de conférer au tablier 4 la position ajourée. L'enroulement du tablier 4 est assuré par un arbre d'enroulement 14. Celui-ci est entraîné en rotation par un moteur lorsque l'on procède à l'enroulement du tablier 4. Ainsi, l'entraînement de l'arbre d'enroulement 14 s'effectue uniquement en phase d'enroulement alors que ledit arbre d'enroulement 14 est en roue libre lors du déroulement du tablier 4.

On dispose en aval de l'arbre d'enroulement 14 un second arbre 15 destiné uniquement au déroulement du tablier 4. Cet arbre de déroulement 15 est entraîné en rotation par l'intermédiaire d'un moteur avec frein. Ainsi, en phase d'enroulement, le second arbre 15 est en roue libre.

Du fait qu'en phase de déroulement, l'arbre de déroulement 15 n'est plus obligé de vaincre la résistance du ou des ressorts incorporés dans l'arbre d'enroulement 14 couramment utilisé et que l'arbre de déroulement 15 ne fait que pousser le tablier 4 pour faciliter son avance, le moteur de cet arbre de déroulement 15 peut être très faible. Ainsi, ce moteur peut avoir une puissance vingt fois moindre que celle du moteur utilisé couramment et devant entraîner alternativement l'arbre d'enroulement 14 ou de déroulement 15 ou vaincre la résistance du ou des ressorts incorporés dans l'arbre d'enroulement.

Par ailleurs, en raison du faible effort demandé à cet arbre de déroulement 15, on peut utiliser celui-ci pour le d'enroulement de plusieurs tabliers juxtaposés, ce qui permet de recouvrir un toit de véranda de grande surface. Dans ce mode de réalisation, l'arbre de déroulement 15 d'un premier tablier 4 est moteur alors que les autres arbres de déroulement des autres tabliers 4 sont des arbres menés reliés à l'arbre moteur 15 par un simple accouplement. Il est évident que, également l'arbre d'enroulement 14 du premier tablier 4 est un arbre moteur, alors que les autres arbres d'enroulement 14 sont des arbres menés reliés à l'arbre moteur 14 par un simple accouplement.

Pour assurer le blocage de l'arbre de déroulement 15 par suite d'un obstacle en aval et/ou en amont, les chants latéraux des lames 11, 12, 13 du tablier 4 sont pourvus d'un têton de préhension 16, 17, 18. Conformément à l'invention, ces têtons de préhension 16, 17, 18 comportent une résistance supérieure au couple du moteur de l'arbre de déroulement 15. Ce dernier comporte à chaque extrémité une roue à cames d'entraînement 19 représentant une configuration d'étoile dont les branches 20, 21, 22 présentent des flancs 23, 24 constitués d'une développante de cercle. Ces roues à cames 19 coopèrent avec des guides 25. Le ou les têtons de préhensionion 16, 17, 18, coincés entre les branches 20, 21, 22 des roues à cames 19 et les guides 25 bloquent en rotation lesdites roues à cames 19 et, par voie de conséquence, bloquent en rotation l'arbre de déroulement 15.

Du fait que le moteur à frein de l'arbre de déroulement 15 continue à tourner tant que le tablier 4 n'est pas entièrement déployé, on intercale entre le moteur à frein et l'arbre de déroulement 15 des moyens de débrayage actionnés par l'arbre de déroulement 15 lorsque celui-ci est bloqué.

**Revendications**

1. Volet roulant pour toits de vérandas et analogues comprenant un tablier (4) se déplaçant pratiquement horizontalement et formé de lames (11, 12, 13) dont les chants sont pourvus d'un têton de préhension (16, 17, 18) et, logés dans un caisson (6), un arbre d'enroulement (14) du tablier (4), un second arbre (15) pour le déroulement du tablier (4) des moyens d'entraînement pour entraîner alternativement en rotation l'arbre d'enroulement (14) et l'arbre de déroulement (15), ces derniers étant alternativement en roue libre lors des opérations inverses, ce second arbre de déroulement (15) étant disposé en aval par rapport à l'arbre d'enroulement (14) et présentant à chaque extrémité une roue à cames d'entraînement (19) coopérant avec les tétons de préhension (16, 17, 18) les lames (11, 12, 13) du tablier (4) caractérisé en ce que les moyens d'entraînement sont un premier moteur entraînant directement l'arbre d'enroulement (14) et un deuxième moteur comportant un frein relié par l'intermédiaire de moyens de débrayage à l'arbre de déroulement (15), le moteur avec frein entraînant l'arbre de déroulement (15) ayant une puissance inférieure à la puissance de l'arbre d'enroulement (14).

2. Volet roulant selon a revendication 1, caractérisé en ce que le moteur avec frein entraînant l'arbre de déroulement (15) comporte un couple moteur inférieur à la résistance du téton de préhension (16, 17, 18) des lames (11, 12, 13) du tablier (4).

3. Volet roulant selon les revendiacations 1 et 2, caractérisé en ce que le couple moteur du moteur avec frein de l'arbre de déroulement (15) comporte une valeur plus faible que celle du couple moteur du moteur de l'arbre d'enroulement (14) et celle de la résistance des tétons de préhension (16, 17, 18) des lames (11, 12, 13) du tablier (4).

4. Volet roulant selon la revendication 1, caractérisé en ce que les lames (11, 12, 13) du tablier (4) comportent des tétons (16, 17, 18) bloquent en rotation l'arbre de déroulement (15) en cas d'obstacle empêchant l'avance du tablier (4).

5. Volet roulant selon la revendication 1, caractérisé en ce qu'il comporte, en combinaison, un arbre d'enroulement moteur (14) pourvu d'un premier moteur sans frein et accouplé à des arbres d'enroulement menés et un arbre de déroulement moteur (15) pourvu d'un deuxième moteur avec frein débrayable de puissance inférieure au premier et accouplé à des arbres de déroulement menés.

6. Volet roulatn selon la revendication 1, caractérisé en ce que le caisson (6) comporte une brosse (8) à son entrée (7) et une ouverture (10) à sa partie inférieure pour éliminer les corps étrangers tels que feuilles, cailloux et autres.

7. Volet roulatn selon la revendication 1, caractérisé en ce que le caisson (6) comporte des guides (25) coopérant avec les roues à cames (19) montées sur l'arbre de déroulement (15).

**Claims**

1. Roller shutter for verandah roofs and the like comprisig a blind (4) which is displaced practically horizontally and formed of slats (11, 12, 13) whose sides are provided with a gripping stud (l6, 17, 18) and, accomodated dated in a box (6), a shaft (14) for rolling up the blind (4), a second shaft (15) for unrolling the blind (4), drive means for alternately driving the rolling shaft (14) and the unrolling shaft (15) in rotation, these latter being alternately freewheeling during reverse operations, the second shaft (15) for unrolling being arranged downstream with respect to the rolling shaft (14) and having at each end a driving sprocket wheel (19) co-operating with the gripping studs (16, 17, 18) of the slats (11, 12, 13) of the blind (4), characterised in that the driving means are a first motor which directly drives the rolling shaft (14) and a second motor having a brake connected by disengaging means to the unrolling shaft (15), the braked motor driving the unrolling shaft (15) having a power lower than the power of the rolling shaft (14).

2. Roller shutter as claimed in claim 1, characterised in that the braked motor driving the unrolling shaft (15) has a motor torque lower than the resistance of the gripping stud (16, 17, 16) of the slats (11, 12, 13) of the blind (4).

3. Roller shutter as claimed in claims 1 and 2, characterised in that the motor torque of the braked motor of the unrolling shaft (15) has a lower value than that of the motor torque of the motor of the rolling shaft (14) and that of the resistance of the gripping studs (16, 17, 18) of the slats (1 1, 12, 13) of the blind (4).

4. Roller shutter as claimed in claim 1, characterised in that the slats (11, 12, 13) of the blind (4) have studs (l6, 17, 18) which lock the unrolling shaft (15) in rotation in the event of an obstacle preventing the advance of the blind (4).

5. Roller shutter as claimed in claim 1, characterised in that it has, in combination, a driving rolling shaft (14) provided with a first unbraked motor and coupled to driven rolling shafts and a driving unrolling shaft (15) provided with a disengageable second braked motor of lower power than the first and coupled to driven unrolling shafts.

6. Roller shutter as claimed in claim 1, characterised in that the box (6) has a brush (8) at its inlet (7) and an opening (10) on its lower part to eliminate the foreign bodies such as leaves, pebbles and others.

7. Roller shutter as claimed in claim 1, characterised in that the box (6) has guides (25) which co-operate with the sprocket wheels (19) mounted on the unrolling shaft (15).

**Patentansprüche**

1. Rolladen für Verandadächer und ähnliches, mit einem Feld (4), das sich praktisch waagerecht bewegt und aus Lamellen (11, 12, 13) gebildet ist, deren Schmalseiten mit einer Greifkappe (16, 17, 18) versehen sind und mit einer in einem Kasten (6) untergebrachten Aufrollwelle (14) des Feldes (4), und mit einer zweiten Welle (15) zum Abrollen des Feldes (4), mit Antriebsmitteln zum alternativen Antrieb der Drehbewegung der Aufrollwelle (14) und der Abrollwelle (15), wobei die letzteren sich alternativ bei den umgekehrten Verrichtungen im Freilauf bewegen, und wobei diese zweite Abrollwelle (15) unterhalb der Aufrollwelle (14) angeordnet ist und an jedem Ende ein Nockenantriebsrad (19) aufzeigt, das mit den Greifkappen (16, 17, 18) der Lamellen (11, 12, 13) des Feldes (4) zusammenwirkt, dadurch gekennzeichnet, dass es sich bei den Antriebsmitteln um einen ersten Motor handelt, der die Aufrollwelle (14) direkt antreibt, und um einen zweiten Motor, der eine Bremse umfasst, die über Auskupplungsmittel mit der Abrollwelle (15) verbunden ist, wobei der Motor mit Bremse die Abrollwelle (15) antreibt und diese eine Leistung aufzeigt, die geringer als die Leistung der Aufrollwelle (14) ist.

2. Rolladen gemäss Anspruch 1, dadurch gekennzeichnet, dass der Motor mit Bremse, der die Abrollwelle (15) antreibt, ein Motormoment aufzeigt, das geringer als der Widerstand der Greifkappe (16, 17, 18) der Lamellen (11, 12, 13) des Feldes (4) ist.

3. Rolladen gemäss den Ansprüchen 1 und 2, dadurch gekennzeichnet, dass der Motormoment des Motors mit Bremse der Abrollwelle (15) einen geringeren Wert als der Motormoment der Aufrollwelle (14) und als der Widerstand der Greifklappen (16, 17, 18) der Lamellen (11, 12, 13) des Feldes (4) aufzeigt.

4. Rolladen gemäss Anspruch 1, dadurch gekennzeichnet, dass die Lamellen (11, 12, 13) des Feldes (4) Greifköpfe (16, 17, 18) aufzeigen, die die Drehbewegung der Abrollwelle (15) im Falle einer Behinderung des Vorschubs des Feldes (4) sperren.

5. Rolladen gemäss Anspruch 1, dadurch gekennzeichnet, dass er als Kombination eine Aufrollwelle (14) mit einem ersten Motor ohne Bremse und an zwangsgeführte Aufrollwellen gekoppelt, und eine Abrollwelle (15) mit einem zweiten Motor mit auskuppelbarer Bremse und einer im Vergleich zum ersten Motor geringeren Leistung, mit Kopplung an zwangsgeführte Abrollwellen, aufzeigt.

6. Rolladen gemäss Anspruch 1, dadurch gekennzeichnet, dass der Kasten (6) eine Bürste (8) an seinem Eingang (7) und eine Öffnung (10) in seinem unteren Teil aufzeigt, um Fremdkörper wie Laub, Kieselsteine und ähnliches ausscheiden zu können.

7. Rolladen gemäss Anspruch 1, dadurch gekennzeichnet, dass der Kasten (6) Führungen (25) aufzeigt, die mit den Nockenrädern (19) zusammenwirken, die an der Abrollwelle (15) angebracht sind.

# FIG. 1

EP 0 228 977 B1